# EUROPÄISCHE PATENTANMELDUNG

(11) **EP 3 742 188 A1**
(43) Veröffentlichungstag der Anmeldung: **25.11.2020**
(21) Anmeldenummer: 19175661.8
(22) Anmeldetag: 21.05.2019
(51) Int. Cl.: G01S 5/14, H04W 4/02, H04W 64/00

(54) **VERFAHREN ZUR ADRESSIERUNG VON KOMMUNIKATIONSFÄHIGEN ASSETS IN EINER PROZESSUMGEBUNG UND FERTIGUNGSANLAGE**

(71) Anmelder: Siemens Aktiengesellschaft, 80333 München (DE)
(72) Erfinder: Steindl, Günter, 92284 Poppenricht (DE)

(57) **Zusammenfassung**

Zur Adressierung von kommunikationsfähigen Assets (A1) in einer Prozessumgebung, wobei die Assets mittels eines auf elektromagnetischen Wellen basierenden Kommunikationssystem ansprechbar sind, wird vorgeschlagen
von Referenzeinheiten (B1,B2,B3,B4) Anfragetelegramme (T1,T2,T3,T4) zu dem jeweils zu adressierendem Asset zu senden, wobei diese mit Antworttelegrammen (T11,T22,T33,T44) beantwortet werden, und Laufzeiten (t₁,t₂,t₃,t₄)zwischen dem Aussenden des Anfragetelegramms und dem Empfangen des Antworttelegramms ermittelt werden,
wobei anhand der ermittelten Laufzeiten und der Ausbreitungsgeschwindigkeit (c) der elektromagnetischen Wellen entsprechend eine erste Entfernung (l₁), eine zweite Entfernung (l₂) und eine dritte Entfernung (l₃) berechnet wird und mittels einer Triangulation eine Position des Assets berechnet wird und die Position des Assets als Grundlage für eine automatisierte namensorientierte Adressvergabe oder Namensadressraumvergabe verwendet wird.

## Beschreibung

Die Erfindung betrifft ein Verfahren zur Adressierung von kommunikationsfähigen Assets in einer Prozessumgebung, wobei die Assets mittels eines auf elektromagnetischen Wellen basierenden Kommunikationssystem ansprechbar sind.

Des Weiteren betrifft die Erfindung eine Fertigungsanlage innerhalb einer Prozessumgebung umfassend kommunikationsfähige Assets, ein Kommunikationssystem basierend auf elektromagnetischen Wellen, eine erste Referenzeinheit, eine zweite Referenzeinheit, eine dritte Referenzeinheit, wobei zur Adressierung der Assets die Referenzeinheiten und die Assets ausgestaltet sind Signallaufzeiten zu messen.

Gemäß dem Referenzarchitekturmodell Industrie 4.0 (RAMI 4.0) ist ein Asset "Das reale Ding in der physischen Welt", wobei in einer Functional Ebene die Funktion eines Assets beschrieben ist. Eine Verwaltungsschale ist ein Datenspeicher aller Informationen zum Asset. Jedes Asset hat seine eigene Verwaltungsschale. Assets im Kontext von Industrie 4.0 sind beispielsweise Anlagengegenstände und Anlageneinzelteile, elektronische Baugruppen, Teilsysteme und Systeme, Maschinen, Anlagen und Anlagenverbünde, Dienste, Konzepte und Ideen, Pläne, Archive, Programme.

Eine weitere Definition des Assets findet sich in der DIN Spec 91345 vom April 2016 "Referenzarchitekturmodell Industrie 4.0 (RAMI 4.0).

Um nach bisherigem Kenntnisstand für Assets oder Maschinenteile Adressen zu vergeben, wird bisher mit einem Engineeringsystem und mit einem topografischen Abbild oder mit einem Modell einer Anlage bestimmten Assets oder Anlagenteilen für eine Kommunikation Adressen vergeben.

Aufgabe der vorliegenden Erfindung ist es ein Verfahren zur Adressierung von Assets anzugeben um den Aufwand der Konfiguration mit einem Engineeringsystem zu vereinfachen.

Die Aufgabe wird für das eingangs genannte Verfahren dadurch gelöst, dass von einer ersten Referenzeinheit ein erstes Anfragetelegramm zu dem jeweils zu adressierenden Asset gesendet wird, wobei dieses mit einem ersten Antworttelegramm beantwortet wird, und eine erste Laufzeit zwischen dem Aussenden des ersten Anfragetelegramms und dem Empfangen des ersten Antworttelegramms ermittelt wird, weiterhin wird von einer zweiten Referenzeinheit ein zweites Anfragetelegramm zu dem jeweils zu adressierenden Asset gesendet, wobei dieses mit einem zweiten Antworttelegramm beantwortet wird, und eine zweite Laufzeit zwischen dem Aussenden des zweiten Anfragetelegramms und dem Empfangen des zweiten Antworttelegramms ermittelt wird, weiterhin wird mit einer dritten Referenzeinheit ein drittes Anfragetelegramm zu dem jeweils zu adressierenden Asset gesendet, wobei dieses mit einem dritten Antworttelegramm beantwortet wird, und eine dritte Laufzeit zwischen dem Aussenden des dritten Anfragetelegramms und dem Empfangen des dritten Antworttelegramms ermittelt wird, wobei anhand der ermittelten Laufzeiten und der Ausbreitungsgeschwindigkeit der elektromagnetischen Wellen entsprechend eine erste Entfernung, eine zweite Entfernung und eine dritte Entfernung berechnet wird und mittels einer Triangulation eine Position des Assets berechnetet wird und die Position des Assets als Grundlage für eine automatisierte namensorientierte Adressvergabe oder Namensadressraumvergabe verwendet wird.

Erfindungsgemäß lassen sich die absoluten Positionen der Assets oder Geräte oder Anlagenteile im Raum als ein Adressierungselement verwenden. Mit der Einführung/Unterstützung einer genauen Synchronisation bei einer Kommunikation, beispielsweise bei dem neuen 5G-Funkstandard oder Wi-fi bzw. Bluetooth kann ein sogenanntes LinkDelay, also die Zeit von einer Basisstation zu einem Client und zurück sehr genau gemessen werden und damit unter Ausnutzung der physikalischen Konstanten eine Entfernung bestimmt werden. Kennt man nun den genauen Standort einer Referenzeinheit, beispielsweise den Standort von einer Basisstation oder einem Accesspoint oder einem Bluetooth Referenzknoten, so kann man mit Hilfe der Triangulation eine genaue Positionsbestimmung des Clients im Raum vornehmen.

Eine derartig automatisierte Adressierung wird beispielsweise sehr vorteilhaft bei der Zusammenstellung von Komponenten in einem automatisierten Anlagenbetrieb, beispielsweise mit selbstfahrenden Robotern, ausgenutzt.

Auch ist es verfahrensgemäß von Vorteil, wenn die ermittelten Positionen zur Anlagenerfassung genutzt werden und ein Abbild der physikalisch angeordneten Assets erzeugt wird. Mit den ermittelten Positionsangaben lässt sich auf vorteilhafte Weise eine Anlagenerfassung durchführen, so dass im Störungsfall einfach zu einer Störung bzw. zu dem die Störung auslösenden Assets navigiert werden kann. Auch lassen sich Anlageninstallationspläne überprüfen und es lässt sich kontrollieren, ob das Gerät oder Asset auch da montiert oder positioniert ist, wo es sein sollte.

Dazu ist es verfahrensgemäß von Vorteil, dass aus dem ermittelten Positionen eine Istanordnung im Hinblick auf eine selbstaufbauende, modulare räumliche Abfolgen von mobilen Fertigungseinrichtungen ermittelt wird und genutzt wird um eine Sollanordnung mit der Istanordnung zu vergleichen.

Soll sich beispielsweise eine Fertigungsstraße aus autonomen Robotereinheiten selbst aufbauen, so können die autonomen Robotereinheiten gesammelt auf den Platz, wo die Fertigungseinrichtung entstehen soll, fahren und mit Hilfe des Adressierungsverfahrens und dem Vergleich der Ist- und Sollanordnung können sie automatisch positioniert werden.

In einem nächst feineren Schritt können verfahrensgemäß bei einer Abweichung zwischen der Sollanordnung und der Istanordnung für die mobilen Fertigungseinrichtungen Korrektur-Positionsdaten bereitgestellt werden, wobei die Fertigungseinrichtungen als autonome Robotereinheiten ausgestaltet sind und diese sich mit Hilfe der Korrektur-Positionsdaten richtig positionieren.

Die eingangs genannte Aufgabe wird ebenso durch eine Fertigungsanlage innerhalb einer Prozessumgebung gelöst, wobei die Fertigungsanlage das Verfahren anwendet. Die Fertigungsanlage umfasst kommunikationsfähige Assets, ein Kommunikationssystem basierend auf elektromagnetischen Wellen, eine erste Referenzeinheit, eine zweite Referenzeinheit, eine dritte Referenzeinheit, wobei zur Adressierung der Assets die Referenzeinheiten und die Assets ausgestaltet sind, von der ersten Referenzeinheit ein erstes Anfragetelegramm zu dem jeweils zu adressierenden Asset zu senden, wobei dieses ausgestaltet ist, mit einem ersten Antworttelegramm zu antworten, weiterhin ist die erste Referenzeinheit ausgestaltet, eine erste Laufzeit zwischen dem Aussenden des ersten Anfragetelegramms und dem Empfangen des ersten Antworttelegramms zu ermitteln, wobei die zweite Referenzeinheit ausgestaltet ist, ein zweites Anfragetelegramm zu dem jeweils zu adressierenden Asset zu senden, wobei dieses wiederum ausgestaltet ist, mit einem zweiten Antworttelegramm zu antworten, weiterhin ist die zweite Referenzeinheit ausgestaltet eine zweite Laufzeit zwischen dem Aussenden des zweiten Anfragetelegramms und dem Empfangen des zweiten Antworttelegramms zu ermitteln, weiterhin ist die dritte Referenzeinheit dazu ausgestaltet, ein drittes Anfragetelegramm zu dem jeweils zu adressierenden Asset zu senden, wobei dieses wiederum ausgestaltet mit einem dritten Antworttelegramm zu antworten, weiterhin ist die dritte Referenzeinheit ausgestaltet, eine dritte Laufzeit zwischen dem Aussenden des dritten Anfragetelegramms und dem Empfangen des dritten Antworttelegramms zu ermitteln, wobei ein Lokalisierungsmittel vorgesehen ist, welches ausgestaltet ist, anhand der ermittelten Laufzeiten und der Ausbreitungsgeschwindigkeit der elektromagnetischen Wellen entsprechend eine erste Entfernung, eine zweite Entfernung und eine dritte Entfernung zu berechnen, weiterhin ist das Lokalisierungsmittel ausgestaltet, mittels einer Triangulation eine Position des Assets zu berechnen, wobei ein Adressierungsmittel vorgesehen ist, welches ausgestaltet ist, auf der Grundlage der Position des Assets eine automatisierte namensorientierte Adresse oder ein Namensadressraum für das Asset zu vergeben.

Mit der Zeichnung wird ein Ausführungsbeispiel der Erfindung aufgezeigt. Es zeigt:
- FIG 1: eine Fertigungsanlage F in einer räumlichen, dreidimensionalen Darstellung, und
- FIG 2: das Prinzip einer Triangulation aufgrund von Laufzeitmessungen zwischen Referenzeinheiten und einem Asset.

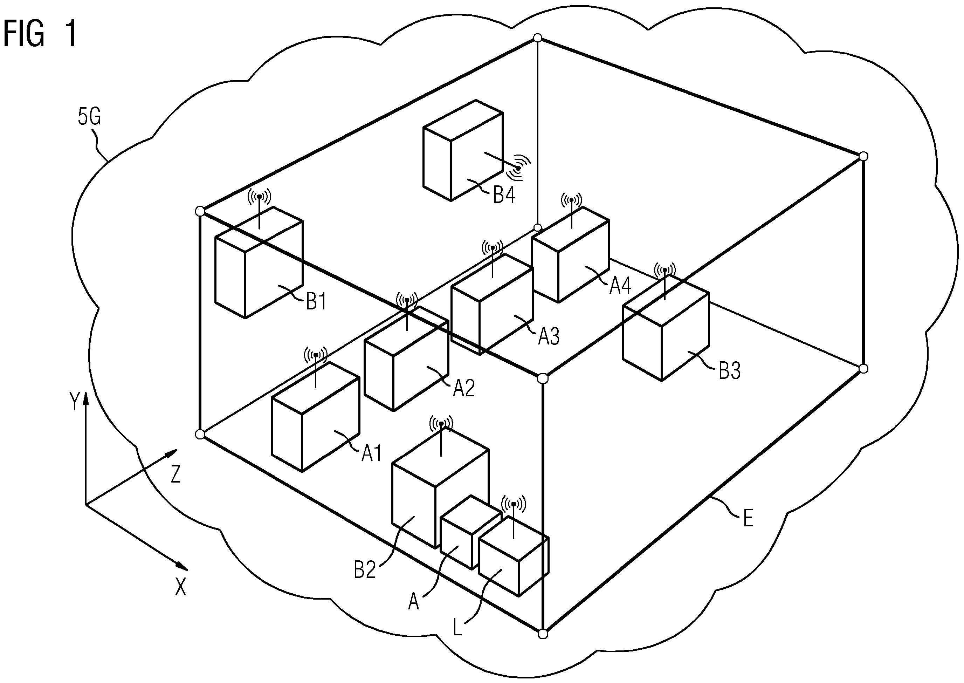

Gemäß FIG 1 ist eine Fertigungsanlage F innerhalb einer Prozessumgebung E dargestellt. Die Fertigungsanlage F umfasst ein erstes Asset A1, ein zweites Asset A2, ein drittes Asset A3 und ein viertes Asset A4. Die Assets A1,A2,A3,A4 sind beispielsweise mobile Fertigungseinrichtungen wie sie sich schon in einer Reihe positioniert haben um eine zukünftige Fertigungsstraße zu bilden.

In der Prozessumgebung E befinden sich an unterschiedlichen Stellen im Raum eine erste Referenzeinheit B1, eine zweite Referenzeinheit B2, eine dritte Referenzeinheit B3 und eine vierte Referenzeinheit B4. Die Referenzeinheiten B1,B2,B3,B4 können über ein Kommunikationssystem 5G Funkverbindungen untereinander aufnehmen. Die zweite Referenzeinheit B2 steht mit einem Adressierungsmittel A und einem Lokalisierungsmittel L in Verbindung. Sollen nun die Positionsdaten X,Y,Z von den Assets A1,A2,A3,A4 bestimmt werden, so wird folgendes Verfahren angewendet:
Zunächst wird die Position des ersten Assets A1 bestimmt und ihm eine Adresse vergeben.

Die erste Referenzeinheit B1 sendet ein erstes Anfragetelegramm T1 zu dem ersten Asset A1, wobei das erste Asset A1 mit einem ersten Antworttelegramm T11 antwortet. Beispielsweise wird in der ersten Referenzeinheit B1 eine erste Laufzeit t₁ zwischen dem Aussenden des ersten Anfragetelegramms T1 und dem Empfangen des ersten Antworttelegramms T11 ermittelt.

In einem nächsten Schritt sendet die zweite Referenzeinheit B2 ein zweites Anfragetelegramm T2 zu dem ersten Asset A1, welches wiederum mit einem zweiten Antworttelegramm T22 antwortet und es wird entsprechend eine zweite Laufzeit t₂ berechnet.

In einem dritten Schritt sendet die Referenzeinheit B3 ein drittes Anfragetelegramm T3 zu dem ersten Asset A1, wobei dieses mit einem dritten Antworttelegramm T33 antwortet und es wird entsprechend eine dritte Laufzeit t₃ berechnet.

Zur Erhöhung der Genauigkeit kann nun noch eine vierte Referenzeinheit B4 ebenso eine vierte Laufzeit ermitteln.

Die ermittelten Laufzeitdaten werden an ein Lokalisierungsmittel L weitergegeben. Das Lokalisierungsmittel L ist ausgestaltet, anhand der ermittelten Laufzeiten t₁,t₂,t₃ und der Ausbreitungsgeschwindigkeit C der elektromagnetischen Wellen entsprechend eine erste Entfernung l₁, eine zweite Entfernung l₂ und eine dritte Entfernung l₃ zu berechnen. Weiterhin ist das Lokalisierungsmittel L dazu ausgestaltet, mittels einer Triangulation eine Position X₁,Y₁,Z₁ des ersten Assets A1 zu berechnen. Die Berechnungen der Positionen können erfolgen, da die Positionsdaten X,Y,Z der Referenzeinheiten B1,B2,B3,B4 bekannt sind.

Die berechneten Positionen werden an ein Adressierungsmittel A weitergeleitet, welches ausgestaltet ist, auf Grundlage der nun errechneten Position X₁,Y₁,Z₁ des ersten Assets A1 eine namensorientierte Adresse, basierend auf der absoluten Position des ersten Assets A1 im Raum der Prozessumgebung E, anzugeben und dieses als Adressierungselement zu verwenden.

Misst man mit einer Genauigkeit von ca. Ins, unter Berücksichtigung der Lichtgeschwindigkeit von 299792458 m/s so erreicht man einen Fehler von 0,299 m. Das bedeutet, bei einer Genauigkeit von 3ns ließe sich der Ort etwa auf ein Kubikmeter genau bestimmen. Mit steigender Genauigkeit (Ins := 0,299; 100ps := 0,0299m) sinkt der Fehler und der Ort kann genauer bestimmt werden.

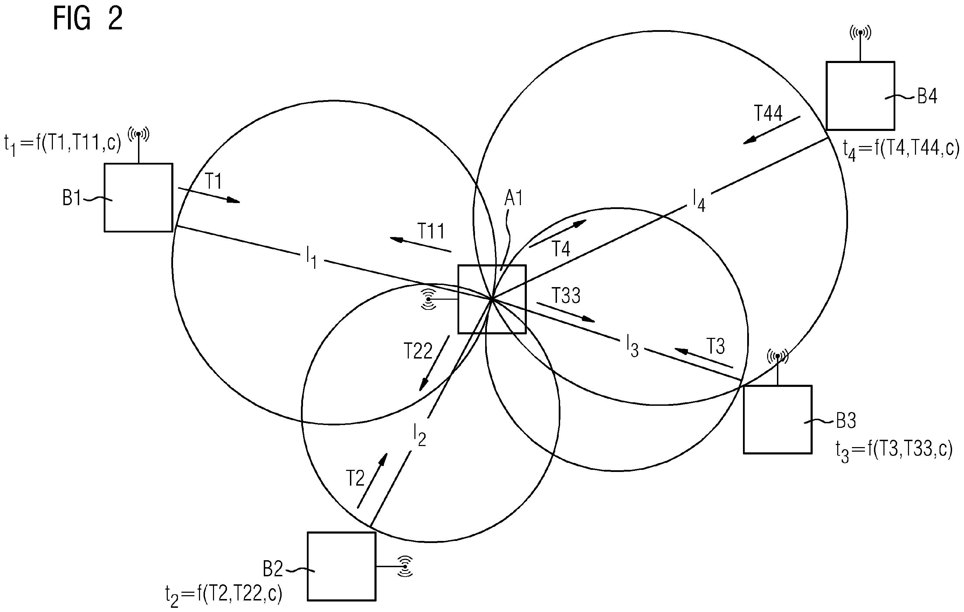

Die FIG 2 dient zur Verdeutlichung der Positionsbestimmung am Beispiel mit vier Referenzeinheiten B1,B2,B3,B4. Durch Aussenden eines ersten Anfragetelegramms T1 zu dem ersten Asset A1 und dem Empfangen des ersten Antworttelegramms T11, kann eine erste Entfernung l₁ berechnet werden. Für die Berechnung der Entfernung l₁ bzw. der ersten Laufzeit t₁ liegt in der ersten Referenzeinheit B1 eine Funktionsgleichung f(T1,T11,c) vor. Ebenso wird verfahrensgemäß mit den restlichen Referenzeinheiten B2,B3,B4 verfahren. Die ermittelten Laufzeiten t₁,t₂,t₃,t₄ bzw. die ermittelten Entfernungen l₁,l₂,l₃,l₄ werden für eine automatisierte Adressberechnung dem in FIG 1 dargestellten Adressierungsmittel A zugeführt.

## Patentansprüche

1. Verfahren zur Adressierung von kommunikationsfähigen Assets (A1,...,A4) in einer Prozessumgebung (E), wobei die Assets (A1,...,A4) mittels eines auf elektromagnetischen Wellen basierenden Kommunikationssystem (5G) ansprechbar sind, wobei von
- einer ersten Referenzeinheit (B1) ein erstes Anfragetelegramm (T1) zu dem jeweils zu adressierendem Asset (A1) gesendet wird, wobei dieses mit einem ersten Antworttelegramm (T11) beantwortet wird, und eine erste Laufzeit (t₁) zwischen dem Aussenden des ersten Anfragetelegramms (T1) und dem Empfangen des ersten Antworttelegramms (T11) ermittelt wird,
- einer zweiten Referenzeinheit (B2) ein zweites Anfragetelegramm (T2) zu dem jeweils zu adressierendem Asset (A1) gesendet wird, wobei dieses mit einem zweiten Antworttelegramm (T22) beantwortet wird, und eine zweite Laufzeit (t₂) zwischen dem Aussenden des zweiten Anfragetelegramms (T2) und dem Empfangen des zweiten Antworttelegramms (T22) ermittelt wird,
- einer dritten Referenzeinheit (B3) ein drittes Anfragetelegramm (T3) zu dem jeweils zu adressierendem Asset (A1) gesendet wird, wobei dieses mit einem dritten Antworttelegramm (T33) beantwortet wird, und eine dritte Laufzeit(t₃) zwischen dem Aussenden des dritten Anfragetelegramms (T3) und dem Empfangen des dritten Antworttelegramms (T33) ermittelt wird,
- wobei anhand der ermittelten Laufzeiten (t₁,t₂,t₃) und der Ausbreitungsgeschwindigkeit (c) der elektromagnetischen Wellen entsprechend eine erste Entfernung (l₁), eine zweite Entfernung (l₂) und eine dritte Entfernung (l₃) berechnet wird und mittels einer Triangulation eine Position (xᵢ,yᵢ,zᵢ) des Assets (A1) berechnet wird und die Position (xᵢ,yᵢ,zᵢ) des Assets (A1) als Grundlage für eine automatisierte namensorientierte Adressvergabe oder Namensadressraumvergabe verwendet wird.

2. Verfahren nach Anspruch 1, wobei die ermittelten Positionen (xᵢ,yᵢ,zᵢ) zur Anlagenerfassung genutzt werden und ein Abbild der physikalisch angeordneten Assets (A1,...,A4) erzeugt wird.

3. Verfahren nach Anspruch 1 oder 2, wobei aus den ermittelten Positionen (xᵢ,yᵢ,zᵢ) eine Istanordnung (IA) im Hinblick auf eine selbstaufbauende modulare räumliche Abfolge von mobilen Fertigungseinrichtungen ermittelt wird und genutzt wird um eine Sollanordnung (SA) mit der Istanordnung (IA) zu vergleichen.

4. Verfahren nach Anspruch 3, wobei bei einer Abweichung zwischen der Sollanordnung (SA) und der Istanordnung (IA) für die mobilen Fertigungseinrichtungen Korrektur-Positionsdaten (Δxᵢ, Δyᵢ, Δzᵢ) bereitgestellt werden, wobei die Fertigungseinrichtungen als autonome Robotereinheiten ausgestaltet sind und diese sich mit Hilfe der Korrektur-Positionsdaten (Δxᵢ, Δyᵢ, Δzᵢ) richtig positionieren.

5. Fertigungsanlage (F) innerhalb einer Prozessumgebung (E) umfassend
- kommunikationsfähige Assets (A1,...,A4),
- ein Kommunikationssystem (5G) basierend auf elektromagnetischen Wellen,
- eine erste Referenzeinheit (B1),
- eine zweite Referenzeinheit (B2),
- eine dritte Referenzeinheit (B3),
wobei zur Adressierung der Assets (A1,...,A4) die Referenzeinheiten (B1,B2,B3) und die Assets (A1,...,A4) ausgestaltet sind von der
- ersten Referenzeinheit (B1) ein erstes Anfragetelegramm (T1) zu dem jeweils zu adressierenden Asset (A1) zu senden, wobei dieses ausgestaltet ist, mit einem ersten Antworttelegramm (T11) zu antworten, weiterhin ist die erste Referenzeinheit (B1) ausgestaltet eine erste Laufzeit (t₁) zwischen dem Aussenden des ersten Anfragetelegramms (T1) und dem Empfangen des ersten Antworttelegramms (T11) zu ermitteln,
- zweiten Referenzeinheit (B2) ein zweites Anfragetelegramm (T2) zu dem jeweils zu adressierenden Asset (A1) zu senden, wobei dieses ausgestaltet ist, mit einem zweiten Antworttelegramm (T22) zu antworten, weiterhin ist die zweite Referenzeinheit (B2) ausgestaltet eine zweite Laufzeit (t₂) zwischen dem Aussenden des zweiten Anfragetelegramms (T2) und dem Empfangen des zweiten Antworttelegramms (T22) zu ermitteln,
- dritten Referenzeinheit (B3) ein drittes Anfragetelegramm (T3) zu dem jeweils zu adressierenden Asset (A1) zu senden, wobei dieses ausgestaltet ist, mit einem dritten Antworttelegramm (T33) zu antworten, weiterhin ist die dritte Referenzeinheit (B3) ausgestaltet eine dritte Laufzeit(t₃) zwischen dem Aussenden des dritten Anfragetelegramms (T3) und dem Empfangen des dritten Antworttelegramms (T33) ermittelt wird,
- wobei ein Lokalisierungsmittel (L) vorgesehen ist, welches ausgestaltet ist, anhand der ermittelten Laufzeiten (t₁, t₂, t₃) und der Ausbreitungsgeschwindigkeit (c) der elektromagnetischen Wellen entsprechend eine erste Entfernung (l₁), eine zweite Entfernung (l₂) und eine dritte Entfernung (l₃) zu berechnen, weiterhin ist das Lokalisierungsmittel (L) ausgestaltet mittels einer Triangulation eine Position (xᵢ,yᵢ,zᵢ) des Assets (A1) zu berechnen, wobei
- ein Adressierungsmittel (A) vorgesehen ist, welches ausgestaltet ist, auf Grundlage der Position (xᵢ,yᵢ,zᵢ) des Assets (A1) eine automatisierte namensorientierte Adresse oder einen Namensadressraum für das Asset (A1) zu vergeben.
